# FASCICULE DE BREVET EUROPEEN

(11) **EP 0 787 314 B1**
(45) Date de publication et mention de la délivrance du brevet: **03.02.1999**
(21) Numéro de dépôt: 95935500.9
(22) Date de dépôt: 16.10.1995
(51) Int. Cl.: G02C 1/02

(54) **MONTURE DE LUNETTES ET SON PROCEDE D'ASSEMBLAGE SUR DES VERRES ORGANIQUES**
BRILLENGESTELL UND VERFAHREN ZU SEINER MONTAGE AN KUNSSTOFF GLÄSERN
SPECTACLE FRAMES AND METHOD OF SECURING THEM TO ORGANIC LENSES

(30) Priorité: 21.10.1994 FR 9412585
(43) Date de publication de la demande: 06.08.1997
(73) Titulaire: Bac, Colette, 75116 Paris (FR); Ascoli, Françoise, 75017 Paris (FR); Debache, Valérie, 75016 Paris (FR); Bac, David-Olivier, 75116 Paris (FR); Bac, Robert, 75116 Paris (FR)
(72) Inventeur: BAC, Robert, F-75116 Paris (FR)
(74) Mandataire: Sauvage, Renée
(86) Numéro de dépôt international: FR9501359
(87) Numéro de publication internationale: WO9612983

(56) Documents cités:
- DE-C- 291 548
- FR-A- 1 064 340
- FR-A- 2 624 278
- US-A- 2 398 137

## Description

La présente invention concerne une monture de lunettes, ainsi qu'un procédé d'assemblage d'une patte à ergots appartenant à une telle monture sur un verre organique.

Précisément, la monture selon l'invention appartient au type dans lequel deux branches sont adaptées à être chacune montée sur l'un distinct de deux verres organiques par l'une de ses extrémités formant charnière, et un pont nasal est adapté à être monté entre lesdits deux verres, une partie desdites branches et/ou dudit pont nasal comportant des moyens de fixation directe auxdits verres.

Le document DE-C-291 548 divulgue un type de moyen de fixation directe de l'extrémité d'un pont nasal à la tranche d'un verre minéral.

Une autre catégorie de montures du type précité, connues sous le nom de "montures trois pièces", est disponible dans le commerce. Il s'agit de montures qui ne comportent pas de partie adaptée à venir encercler la périphérie des verres, et qui ont donc été conçues pour répondre à un souci de légèreté et de discrétion. Le pont nasal et les branches de ces montures sont fixés aux verres par vissage au travers des verres qui doivent donc être percés à cet effet. Le vissage nécessite le recours à un ensemble de vis, de rondelles, d'écrous et de contre-écrous.

De telles montures présentent toutefois plusieurs inconvénients majeurs, dont il résulte notamment qu'elles ne peuvent être assemblées à des verres que par un opticien très expérimenté et très adroit. En effet, le choix de l'angle selon lequel le perçage doit être effectué est critique pour que, une fois l'assemblage réalisé, les verres soient bien situés dans le plan de port voulu ; une fois l'angle choisi, il est difficile de le respecter au perçage ; enfin, il est nécessaire que l'opticien prenne toutes les précautions afin d'éviter que le verre se brise soit au cours du perçage initial, soit ultérieurement, à savoir pendant l'opération de serrage des vis après montage, voire en cours d'utilisation, sous l'effet de la contrainte exercée sur le verre. En cas de casse, l'opticien doit tailler un nouveau verre et consacrer à nouveau un temps et un soin considérables à sa fixation, ce qui peut engendrer des coûts très importants. Il s'ensuit que de nombreux opticiens sont réticents à proposer de telles montures. Ajoutons que ces montures ont, pour l'opticien, l'inconvénient de comporter un dispositif d'assemblage relativement complexe et coûteux, du fait de la diversité des pièces formant les moyens de fixation.

Si l'on en vient au porteur, l'emplacement des moyens de fixation génère une certaine gêne oculaire, en particulier dans la région nasale, du fait que les vis sont situées dans son champ de vision. Dans des cas extrêmes, le porteur peut même manifester un strabisme convergent (porteurs présentant de petits écarts pupillaires).

Enfin, les lunettes comportant de telles montures sont d'un entretien délicat. Outre leur fragilité intrinsèque, un problème résulte du fait que, dans de telles montures, les vis servant à fixer le pont nasal passent au travers du verre et d'une languette qui dépend du pont nasal et qui se trouve ainsi étroitement appliquée contre la face interne du verre. Des salissures viennent se glisser entre cette languette et le verre, lesquelles salissures sont inaccessibles mais visibles depuis la face extérieure du verre. Un nettoyage aux ultra-sons ne permet généralement pas d'éliminer ces salissures en totalité et le seul moyen de les enlever complètement est de démonter le pont nasal, avec les risques de casse du verre que cela comporte au démontage et au remontage.

La présente invention a pour but de remédier à ces divers inconvénients en proposant une monture de lunettes de très faible masse, qui peut être fixée aux verres par des moyens simples, pouvant être mis en oeuvre par tout opticien, qui offre au porteur de lunettes un champ visuel total et qui ne pose pas de problème de nettoyage.

Ces buts sont atteints en ce sens que, selon l'invention, les moyens de fixation d'une partie desdites branches et/ou dudit pont nasal aux verres sont constitués d'une patte pourvue d'au moins un ergot, préférentiellement de deux ergots, espacés l'un de l'autre d'environ 5 à environ 10 mm, susceptibles de venir en prise avec deux encoches ménagées dans ladite tranche desdits verres, lesquelles encoches ne s'étendent pas d'une face à l'autre desdits verres, les directions dans lesquelles lesdits ergots s'étendent, depuis les zones de connexion respectives desdits ergots avec ladite patte, étant préférentiellement divergentes. Les verres ne sont donc plus percés.

Ladite patte pourvue d'ergots peut éventuellement être d'un seul tenant avec ladite partie desdites branches et/ou dudit pont nasal.

Avantageusement, chacun des ergots forme un angle de 45° environ par rapport à la direction dite "principale" de la patte au voisinage de l'ergot. De cette manière, les ergots sont efficacement immobilisés dans les encoches.

Par "direction principale", on entend la direction de la tangente à la patte, dans le cas d'une patte curviligne, et l'axe longitudinal de la patte, dans le cas d'une patte rectiligne.

La partie de branche peut par exemple être une pièce de jonction qui est d'un seul tenant, à la fois avec un des deux éléments rotatifs de la charnière et avec la patte, ladite pièce de jonction étant perpendiculaire à la fois à l'axe de rotation de la charnière et à la patte.

La partie de branche peut également être une pièce de jonction qui est d'un seul tenant, à la fois avec un des deux éléments rotatifs de la charnière et avec la patte, ladite pièce de jonction formant un angle compris entre environ 80 et environ 85° avec la direction dite "principale" de ladite patte au voisinage de la pièce de jonction. Du point de vue du porteur des lunettes incorporant cette monture, la patte est alors fixée plus haut ou plus bas sur la tranche du verre que dans le cas précédent.

La partie de pont nasal peut par exemple être l'extrémité du pont nasal lui-même, solidarisée à, et perpendiculaire à, la patte.

L'invention concerne également des lunettes incorporant une monture selon l'invention.

L'invention concerne encore un procédé d'assemblage d'une patte à ergots appartenant à une monture selon l'invention sur un verre de lunettes organique, qui comprend les étapes consistant :
a) à ménager une paire d'encoches en V dans la tranche du verre, de sorte que l'ensemble formé par la partie de tranche du verre comprise entre les encoches et chacune des parois adjacentes, dites "parois appariées", de chaque encoche ait sensiblement la même géométrie que la patte à ergots ;
b) à enduire les parois appariées desdites encoches d'un adhésif à prise quasiment instantanée ;
c) à insérer puis à maintenir chacun desdits ergots contre la paroi appariée desdites encoches, le temps nécessaire à la prise;
d) à combler au moyen d'un adhésif l'espace vide restant dans lesdites encoches, entre lesdits ergots et l'autre paroi desdites encoches.

De préférence, l'étape d) est mise en oeuvre environ deux heures après la fin de l'étape c). Grâce à ce procédé de collage en deux temps, les ergots sont efficacement immobilisés dans les encoches, à la paroi appariée desquelles ils adhèrent de manière particulièrement tenace, même en effectuant, par exemple, des mouvements de flexion ou de tension de ladite partie de branche et/ou de pont nasal au niveau de la patte correspondante.

L'invention sera davantage détaillée ci-après, par référence aux dessins annexés dans lesquels :
la figure 1 est une vue en perspective d'une portion de branche d'une monture selon l'invention, fixée à une partie de tranche d'un verre ;
la figure 2 est une vue schématique en coupe de l'ensemble représenté à la figure 1 ; et
la figure 3 est une vue schématique en coupe d'une portion de pont nasal d'une monture selon l'invention, fixée à une partie de tranche d'un verre.

Sur ces figures, des chiffres de référence identiques identifient des éléments identiques ou similaires.

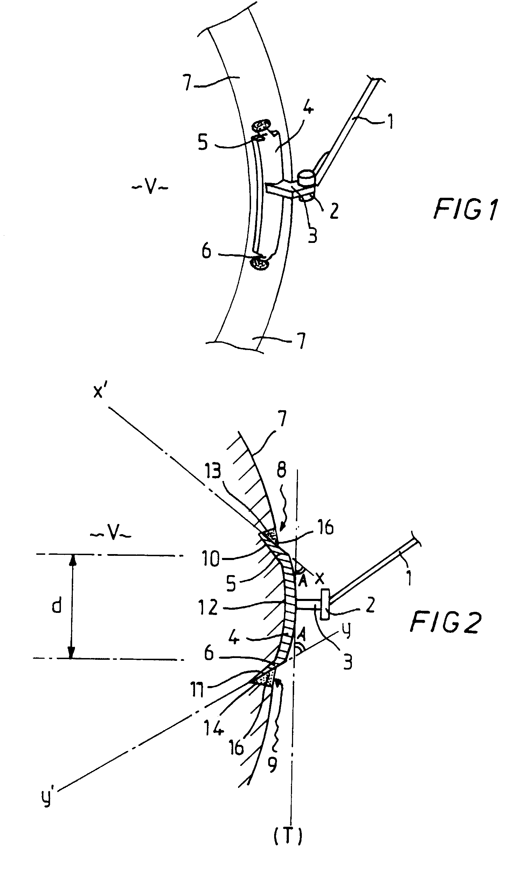

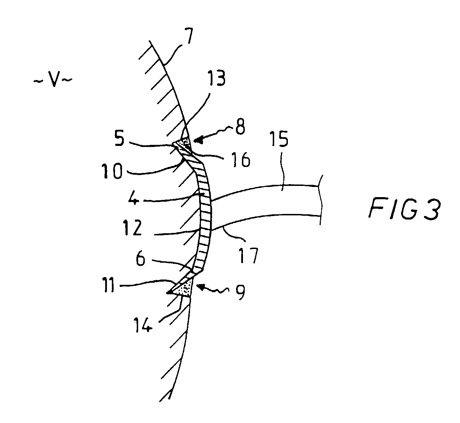

Les figures 1 et 2 illustrent un ensemble constitué d'une portion de branche de lunettes 1 en acier ou titane, par exemple, qui est partiellement repliée et montée pivotante sur une charnière cylindrique 2, solidaire d'une pièce de jonction 3. La pièce de jonction 3 revêt la forme d'une équerre, dont les deux extrémités sont en arcs de cercles, l'une étant adaptée à la demi-circonférence de la charnière 2 et solidaire de celle-ci, et l'autre étant solidaire d'une patte 4. La patte 4 offre, à l'opposé de la pièce de jonction 3, une surface sensiblement rectangulaire, qui présente une faible courbure, à la fois dans les directions longitudinale et transversale, et une faible épaisseur, rapportée à ses autres dimensions. La pièce de jonction 3 est située approximativement dans le plan médian transversal dudit rectangle. La patte 4 est pourvue de deux ergots 5 et 6 qui font chacun saillie depuis, et ont une largeur inférieure à, une largeur dudit rectangle. Les ergots 5,6 s'étendent dans deux directions divergentes X-X' et Y-Y', respectivement, de façon à former un angle A de 45° environ avec la tangente T à la patte 4 au niveau de la pièce de jonction 3. Les deux ergots 5 et 6 ont la forme de griffes qui peuvent avoir une longueur de 1 à 2 mm et une largeur de 0,5 mm, par exemple. La distance d entre les ergots 5,6 est comprise entre environ 5 et environ 10 mm ; elle peut par exemple être de 9 mm. Les ergots 5 et 6 pénètrent respectivement dans deux encoches 8 et 9 ménagées dans la tranche 7 du verre V dont une partie est représentée.

La figure 3 illustre un assemblage similaire à celui des figures précédentes, qui ne se différencie de celles-ci que par le fait qu'une portion de pont nasal 15 a été substituée à l'ensemble portion de branche 1, charnière 2 et pièce de jonction 3 des figures précédentes ; le pont nasal 15 est d'un seul tenant avec, ou solidarisé à, la patte 4 par ses extrémités 17. Cette figure ne sera donc pas décrite plus en détail. Dans ce cas, la distance séparant les deux ergots 5 et 6 est par exemple de 8 mm.

L'ensemble de la monture constituée de deux branches pourvue chacune d'une patte à ergots, tel que représenté sur les figures 1 et 2, et d'un pont nasal pourvu d'une patte à ergots à chacune de ses extrémités, tel que représenté sur la figure 3, est réalisé dans un métal léger et ne pèse, par exemple, pas plus de trois grammes.

L'invention concerne également un procédé d'assemblage en quatre étapes d'une patte à ergots selon l'invention sur une tranche de verre. Ce procédé sera décrit par référence aux figures 1 à 3.

Dans la première étape, une paire d'encoches 8 et 9 est pratiquée dans la tranche 7 d'un verre V, par exemple au moyen d'un foret de 0,5 mm de diamètre. Chaque encoche est délimitée d'une part par une paroi 10,11 appariée à un ergot respectif 5,6 et, d'autre part, par une autre paroi 13,14.

Les encoches 8,9 ont une géométrie telle que l'ensemble formé par la partie de tranche du verre 12 comprise entre les deux encoches 8 et 9, d'une part, et les deux parois appariées 10 et 11, d'autre part, a sensiblement la même géométrie que la patte à ergots 4 pourvue des ergots 5,6. Dans le cas représenté sur les figures 1 à 3, la patte 4 a une forme légèrement curviligne. Elle pourrait également avoir une forme rectiligne, voire diédrique, suivant la forme du verre auquel la monture est appliquée.

La deuxième étape consiste à enduire les parois appariées 10,11 d'un adhésif à prise rapide tel que, par exemple, un adhésif à base de résine époxydique, de résine phénoplaste, de cyano-acrylate, etc.

Dans la troisième étape, les deux ergots 5 et 6 sont introduits dans les encoches 8 et 9, respectivement, et pressés contre les parois appariées 10 et 11, respectivement, de celles-ci, mais sans déformer lesdits ergots 5,6. Les ergots 5,6 sont maintenus pressés contre les parois 10,11 le temps nécessaire à la prise de l'adhésif, qui peut par exemple être de 30 secondes.

La quatrième étape, qui est par exemple mise en oeuvre deux heures après la troisième étape, consiste à combler à l'aide du même adhésif ou d'un adhésif différent les espaces vides entre les ergots 5 et 6 et les parois libres 13 et 14, respectivement, des encoches 8 et 9, comme on le voit en 16.

Comme il ressort de la description ci-dessus, l'invention apporte une monture de lunettes qui, outre sa légèreté, est résistante, pratiquement invisible, offre un champ de vision total et est facilement adaptable à des verres organiques de toute forme, notamment ronde, ovale, rectangulaire ou pantoscopique, concaves ou convexes et convenant à tout type de correction telle que myopie, hypermétropie, astigmatisme ou presbytie, ainsi qu'à des verres progressifs.

## Revendications

1. Monture de lunettes comprenant deux branches (1) adaptées à être chacune montée sur l'un distinct de deux verres organiques (V) par l'une de ses extrémités formant charnière (2) et un pont nasal (15) adapté à être monté entre lesdits deux verres (V), une partie desdites branches (1) et/ou dudit pont nasal (15) comportant des moyens de fixation directe auxdits verres (V), caractérisée en ce que lesdits moyens de fixation sont constitués d'une patte (4) pourvue d'au moins un ergot (5,6) susceptible de venir en prise avec au moins une encoche (8,9) ménagée dans ladite tranche (7) desdits verres (V), laquelle encoche ne s'étend pas d'une face à l'autre desdits verres, lesdits moyens de fixation étant adaptés à venir en prise avec la tranche (7) desdits verres (V) sur une longueur comprise entre environ 5 mm et environ 10 mm.

2. Monture selon la revendication 1, caractérisée en ce que ladite patte (4) est pourvue de deux ergots (5, 6) s'étendant dans des directions (X-X', Y-Y') divergentes depuis les zones de connexion respectives desdits ergots (5, 6) avec ladite patte (4).

3. Monture selon la revendication 2, caractérisée en ce que chacun desdits ergots (5, 6) forme un angle de 45° environ par rapport à la direction dite "principale" (T) de ladite patte (4) au voisinage dudit ergot (5,6), la direction "principale" étant la direction de la tangente à la patte, dans le cas d'une patte curviligne, et l'axe longitudinal de la patte, dans le cas d'une patte rectiligne.

4. Monture selon l'une quelconque des revendications 1 à 3, caractérisée en ce que ladite patte pourvue d'ergots (5,6) est d'un seul tenant avec ladite partie desdites branches (1) et/ou dudit pont nasal (15).

5. Monture selon l'une quelconque des revendications précédentes, caractérisée en ce que ladite partie de branche est une pièce de jonction (3) d'un seul tenant, à la fois avec un des deux éléments rotatifs de ladite charnière (2) et avec ladite patte (4), ladite pièce de jonction (3) étant perpendiculaire à la fois à l'axe de rotation de ladite charnière (2) et à ladite patte (4).

6. Monture selon l'une quelconque des revendications précédentes, caractérisée en ce que ladite partie de pont nasal est l'extrémité du pont nasal lui-même, perpendiculaire à, et solidarisée à, ladite patte (4).

7. Monture selon l'une quelconque des revendications 1 à 4 et 6, caractérisée en ce que ladite partie de branche est une pièce de jonction d'un seul tenant, à la fois avec un des deux éléments rotatifs de ladite charnière (2) et avec ladite patte (4), ladite pièce de jonction (3) formant un angle compris entre environ 80 et environ 85° avec la direction dite "principale" (T) de ladite patte (4) au voisinage de ladite pièce de jonction (3), la direction "principale" étant la direction de la tangente à la patte, dans le cas d'une patte curviligne, et l'axe longitudinal de la patte, dans le cas d'une patte rectiligne.

8. Lunettes incorporant une monture selon l'une quelconque des revendications 1 à 7.

9. Procédé d'assemblage d'une patte (4) à ergots (5,6) appartenant à une monture selon l'une quelconque des revendications 2 à 7 sur un verre (V) de lunettes organique, comprenant les étapes consistant :
a) à ménager une paire d'encoches (8,9) en V dans la tranche (7) du verre (V), de sorte que l'ensemble formé par la partie de tranche (12) du verre comprise entre les encoches (8,9) et chacune des parois adjacentes (10,11), dites "parois appariées", de chaque encoche (8,9) ait sensiblement la même géométrie que la patte (4) à ergots (5, 6) ;
b) à enduire les parois appariées (10,11) desdites encoches (8,9) d'un adhésif à prise quasiment instantanée ;
c) à insérer puis à maintenir chacun desdits ergots (5,6) contre la paroi appariée (10,11) desdites encoches (8,9), le temps nécessaire à la prise;
d) à combler au moyen d'un adhésif l'espace vide restant dans lesdites encoches (8,9), entre lesdits ergots (5,6) et l'autre paroi (13,14) desdites encoches (8,9).

10. Procédé selon la revendication 9, caractérisé en ce que l'étape d) est mise en oeuvre environ deux heures après la fin de l'étape c).

## Patentansprüche

1. Brillengestell mit zwei Bügeln (1), die dazu ausgelegt sind, mit einem ihrer ein Scharnier (2) bildenden Enden jeweils an ein anderes von zwei organischen Gläsern (V) montiert zu werden, und mit einer Nasenbrücke (15), die dazu ausgelegt ist, zwischen diesen beiden Gläsern (V) montiert zu werden, wobei ein Teil dieser Bügel (1) und/oder dieser Nasenbrücke (15) Einrichtungen zur direkten Befestigung an diesen Gläsern (V) besitzt, dadurch gekennzeichnet, daß diese Befestigungseinrichtungen aus einem Montagefuß (4) bestehen, der mit mindestens einem Vorsprung (5, 6) versehen ist, der mit mindestens einem in der Kante (7) der Gläser (V) vorgesehenen Einschnitt (8, 9) in Eingriff kommen kann, wobei dieser Einschnitt sich nicht von einer Seite der Gläser zur anderen erstreckt und die Befestigungseinrichtungen dazu ausgelegt sind, mit der Kante (7) der Gläser (V) auf einer Länge in Eingriff zu kommen, die etwa 5 mm bis etwa 10 mm beträgt.

2. Gestell nach Anspruch 1, dadurch gekennzeichnet, daß der Montagefuß (4) mit zwei Vorsprüngen (5, 6) versehen ist, die sich von den jeweiligen Bereichen des Anschlusses der Vorsprünge (5, 6) an den Montagefuß (4) aus in divergierenden Richtungen (X-X', Y-Y') erstrecken.

3. Gestell nach Anspruch 2, dadurch gekennzeichnet, daß jeder der Vorsprünge (5, 6) mit der sogenannten Hauptrichtung (T) des Montagefußes (4) in Nähe des Vorsprungs (5, 6) einen winkel von etwa 45° bildet, wobei die Hauptrichtung im Fall eines gekrümmten Montagefußes die Richtung der Tangente zum Montagefuß und im Fall eines geradlinigen Montagefußes die Längsachse des Montagefußes ist.

4. Gestell nach einem der Ansprüche 1 bis 3, dadurch gekennzeichnet, daß der mit Vorsprüngen (5, 6) versehene Montagefuß mit diesem Teil der Bügel (1) und/oder der Nasenbrücke (15) einstückig ausgeführt ist.

5. Gestell nach einem der vorhergehenden Ansprüche, dadurch gekennzeichnet, daß dieser Bügelteil ein Verbindungsteil (3) ist, das gleichzeitig mit einem der beiden drehbaren Elemente des Scharniers (2) und mit dem Montagefuß (4) einstückig ausgeführt ist, wobei dieses Verbindungsteil (3) gleichzeitig zur Drehachse des Scharniers (2) und zu dem Montagefuß (4) senkrecht ist.

6. Gestell nach einem der vorhergehenden Ansprüche, dadurch gekennzeichnet, daß dieser Nasenbrückenteil das Ende der Nasenbrücke selbst ist, das zu dem Montagefuß (4) senkrecht ist und mit diesem fest verbunden ist.

7. Gestell nach einem der Ansprüche 1 bis 4 und 6, dadurch gekennzeichnet, daß dieser Bügelteil ein Verbindungsteil ist, das gleichzeitig mit einem der drehbaren Elemente des Scharniers (2) und mit dem Montagefuß (4) einstückig ausgeführt ist, wobei das Verbindungsteil (3) mit der sogenannten Hauptrichtung (T) des Montagefußes (4) in Nähe des Verbindungsteile (3) einen Winkel von etwa 80° bis etwa 85° bildet, wobei die Hauptrichtung im Fall eines gekrümmten Montagefußes die Richtung der Tangente zum Montagefuß und im Fall eines geradlinigen Montagefußes die Längsachse des Montagefußes ist.

8. Brille, die ein Gestell nach einem der Ansprüche 1 bis 7 aufweist.

9. Verfahren zur Montage eines Montagefußes (4) mit Vorsprüngen (5, 6), der zu einem Gestell nach einem der Ansprüche 2 bis 7 gehört, an einem organischen Brillenglas (v), wobei dieses Verfahren aus den folgenden Schritten besteht:
a) man bildet in der Kante (7) des Glases (V) ein Paar von V-förmigen Einschnitten (8, 9), so daß die Einheit, die aus dem zwischen den Einschnitten (8, 9) befindlichen Kantenteil (12) des Glases und aus jedem der anschließenden Wände (10, 11), ,,zugeordnete Wände" genannt, jedes Einschnitts (8,9) gebildet wird, im wesentlichen dieselbe Geometrie wie der Montagefuß (4) mit Vorsprüngen (5, 6) hat,
b) man bestreicht die zugeordneten Wände (10, 11) der Einschnitte (8, 9) mit einem quasi sofort abbindenden Kleber,
c) man fügt jeden der Vorsprünge (5, 6) an die zugeordnete Wand (10, 11) der Einschnitte (8,9) an und hält ihn dann so in der zum Abbinden erforderlichen Zeit,
d) man füllt den in den Einschnitten (8, 9) zwischen den Vorsprüngen (5, 6) und der anderen wand (13, 14) der Einschnitte (8, 9) bleibenden leeren Raum mit Kleber aus.

10. Verfahren nach Anspruch 9, dadurch gekennzeichnet, daß der Schritt d) etwa zwei Stunden nach Beendigung des Schritts c) durchgeführt wird.

## Claims

1. A spectacle frame comprising two side-arms (1) adapted so as each to be fitted to an individual one of two organic lenses (V) via one of its ends forming a hinge (2) and a bridge (15) adapted to be fitted between the said two lenses (V), a part of the said side-arms (1) and/or of the said bridge (15) including means of direct fixing to the said lenses (V), characterized in that the said means of fixing consist in a foot (4) provided with at least one lug (5, 6) engageable with at least one hole (8, 9) provided in said edge (7) of said lenses (V), characterized in that said hole does not extend from one face of said lenses to the other, the said means of fixing being engageable with the edge (7) of said lenses (V) over a distance from around 5 to around 10 mm.

2. A spectacle frame according to claim 1, characterized in that said foot (4) is provided with two lugs (5, 6) which extend along diverging directions (X-X', Y-Y') from the respective regions of connection of said lugs (5, 6) with said foot (4).

3. A frame according to Claim 2, characterized in that each of the said lugs (5, 6) makes an angle of around 45° with respect to the so-called "principal" direction T of the said foot (4) in the vicinity of the said lug (5, 6), the so-called "principal" direction being the direction of the tangent to the foot, in the case of a curved foot, and the longitudinal axis of the foot, in the case of a straight foot.

4. A frame according to anyone of the Claims 1 to 3, characterized in that the said foot with lugs (5, 6) is integral with the said part of the said side-arms (1) and/or of the said bridge (15).

5. A frame according to anyone of the preceding Claims, characterized in that the said side-arm part is a joining piece (3) integral both with one of the two rotary elements of the said hinge (2) and with the said foot (4), the said joining piece (3) being perpendicular both to the axis of rotation of the said hinge (2) and to the said foot (4).

6. A frame according to anyone of the preceding Claims, characterized in that the said bridge part is the end of the bridge itself, perpendicular to, and secured to, the said foot (4).

7. A frame according to Claims 1 to 4 and 6, characterized in that the said side-arm part is a joining piece integral both with one of two rotary elements of the said hinge (2) and with the said foot (4), the said joining piece (3) making an angle of between around 80 and around 85° with the so-called principal direction T of the said foot (4) in the vicinity of the said joining piece (3), the so-called "principal" direction being the direction of the tangent to the foot, in the case of a curved foot, and the longitudinal axis of the foot, in the case of a straight foot.

8. Spectacles incorporating a frame according to anyone of Claims 1 to 7.

9. A process for assembling a foot (4) with lugs (5,6) belonging to a frame according to anyone Claim 2 to 7, to an organic lens (V) of spectacles, comprising the steps consisting :
a) in making a pair of V-shaped holes (8, 9) in the edge (7) of the lens (V), so that the unit formed by the edge part (12) of the lens lying between the holes (8, 9) and each of the adjacent walls, the so-called "matching walls" (10, 11), of each hole (8, 9) has substantially the same geometry as the foot (4) with lugs (5, 6) ;
b) in coating the matching walls of the said holes (8, 9) with a near-instantaneous setting adhesive ;
c) in inserting and then in holding each of the said lugs (5, 6) against the matching wall (10, 11) of the said holes (8, 9), for the time required for setting ;
d) in filling in by means of an adhesive the remaining empty space in the said holes (8, 9), between the said lugs (5, 6) and the other wall (13, 14) of the said holes (8, 9).

10. A process according to Claim 9, characterized in that step d) is implemented around two hours after the end of step c).
